# EUROPÄISCHE PATENTANMELDUNG

(11) **EP 2 056 201 A2**
(43) Veröffentlichungstag der Anmeldung: **06.05.2009**
(21) Anmeldenummer: 08105014.8
(22) Anmeldetag: 11.08.2008
(51) Int. Cl.: G06F 11/36

(54) **Verfahren, Rechnersystem und Computerprogrammprodukt**

(30) Priorität: 31.10.2007 DE 102007052180
(71) Anmelder: Fujitsu Siemens Computers GmbH, 80807 München (DE)
(72) Erfinder: Petersen, Michael, 33175, Bad Lippspringe (DE)
(74) Vertreter: Epping - Hermann - Fischer

(57) **Zusammenfassung**

Die Erfindung betrifft ein Verfahren zur Wartung eines Rechnersystems (1) auf Grundlage eines Zugriffsprofils (9) und eines Änderungsprofils. Das Rechnersystem (1) umfasst wenigstens einen Arbeitsplatzrechner (2) und einen Wartungsrechner (3). Des Weiteren betrifft die Erfindung ein Verfahren zum Bereitstellen eines Zugriffsprofils (9) und ein Verfahren zum Bewerten einer Konfigurationsänderung (22).

Die Erfindung betrifft ebenfalls ein Rechnersystem (1) und ein Computerprogrammprodukt die zur Durchführung der Verfahren geeignet sind.

## Beschreibung

Die Erfindung betrifft ein Verfahren zur Wartung eines Rechnersystems mit wenigstens einer Softwarekomponente. Die Erfindung betrifft des Weiteren ein Verfahren zum Bereitstellen eines Zugriffsprofils und ein Verfahren zum Bewerten einer Softwarekorrektur. Des Weiteren betrifft die Erfindung ein Rechnersystem und ein Computerprogrammprodukt.

Moderne Rechnersysteme dienen zur Ausführung einer Vielzahl von Anwendungen und anderer Softwarekomponenten. Die auf einem Rechnersystem installierten Softwarekomponenten bleiben dabei in der Regel nicht konstant, sondern ändern sich von Zeit zu Zeit. Beispielsweise können zusätzliche Anwendungen oder Gerätetreiber installiert werden. Umgekehrt können zuvor installierte Softwarekomponenten von einem Rechnersystem entfernt werden.

Darüber hinaus enthalten Softwarekomponenten oft Fehler oder andere Mängel, die durch Installation von so genannten Fehlerkorrekturen, auch genannt Bugfixes oder Patches, behoben werden können.

Insbesondere bei umfangreichen Rechnersystemen ist es zunehmend schwierig zu entscheiden, welche Fehlerkorrekturen oder sonstige Konfigurationsänderungen an dem Rechnersystem vorgenommen werden können, sollen oder müssen. Die Installation einer falschen Version einer Fehlerkorrektur führt möglicherweise zu einer Fehlfunktion oder einem Versagen einer zugehörigen Anwendung. Auch das Installieren oder Entfernen zusätzlicher Anwendungen kann einen negativen Einfluss auf andere installierte Softwarekomponenten haben.

Aufgabe der Erfindung ist es, Verfahren zur Verbesserung der Betriebssicherheit für Rechnersysteme zu beschreiben. Insbesondere soll ein Verfahren zum Warten eines Rechnersystems und ein zur Ausführung des Verfahrens geeignetes Rechnersystem beschrieben werden.

Die Aufgabe wird durch ein Verfahren zur Wartung eines Rechnersystems gelöst, das die folgenden Schritte umfasst:
- Erfassen wenigstens eines Zugriffsprofils für wenigstens eine auf dem Rechnersystem installierte Softwarekomponente,
- Bestimmen wenigstens einen Änderungsprofils für wenigstens eine Konfigurationsänderung,
- Bewerten des wenigstens einen bestimmten Änderungsprofils bezüglich einer Betriebssicherheit des Rechnersystems auf Grundlage des wenigstens einen Zugriffsprofils und
- Durchführen der wenigstens einen Konfigurationsänderung nur dann, wenn die Bewertung eine Verbesserung der Betriebssicherheit ergibt.

Durch das Bestimmen und die Bewertung eines Änderungsprofils bezüglich einer Betriebssicherheit eines Rechnersystems auf Grundlage eines Zugriffsprofils können die Auswirkungen einer Konfigurationsänderung auf ein Rechnersystem vor Durchführung der Konfigurationsänderung erkannt werden.

Durch das Zugriffsprofil werden in dem Rechnersystem auftretende Zugriffe, insbesondere auf Dateien und andere Ressourcen, erfasst, um das Rechnersystem vor Durchführung der Konfigurationsänderung zu charakterisieren. Das Änderungsprofil umfasst Informationen über die durchzuführende Konfigurationsänderung, insbesondere die durch sie geänderten Dateien und andere Ressourcen, und charakterisiert die Konfigurationsänderung selbst.

Gemäß einer vorteilhaften Ausgestaltung umfasst die wenigstens eine Konfigurationsänderung wenigstens eine Fehlerkorrektur für eine zu korrigierende Softwarekomponente, wobei die Fehlerkorrektur nur dann auf dem Rechnersystem installiert wird, wenn das wenigstens eine Zugriffsprofil wenigstens einen Zugriff auf die zu korrigierende Softwarekomponente umfasst. Durch Auswertung des Zugriffsprofils auf Zugriffe auf eine zu korrigierende Softwarekomponente kann eine unnötige Installation von Fehlerkorrekturen für nicht benötigte Softwarekomponenten vermieden werden.

Gemäß einer weiteren vorteilhaften Ausgestaltung werden im Schritt des Bestimmens des wenigstens einen Änderungsprofils Unverträglichkeitsinformationen für die wenigstens eine Konfigurationsänderung bezüglich einer beeinflussten Softwarekomponente bestimmt. Dabei wird die Konfigurationsänderung nur dann in dem Rechnersystem durchgeführt, wenn das Zugriffsprofil keinen Zugriff auf die beeinflusste Softwarekomponente umfasst. Durch Untersuchen des Zugriffsprofils auf durch eine Konfigurationsänderung verursachte Unverträglichkeiten kann die Durchführung möglicherweise schädlicher Konfigurationsänderungen vermieden werden.

Gemäß einer weiteren vorteilhaften Ausgestaltung wird im Schritt des Bestimmens des wenigstens einen Änderungsprofils eine Priorität für die Konfigurationsänderung bestimmt, wobei die wenigstens eine Konfigurationsänderung nur dann in dem Rechnersystem ausgeführt wird, wenn die bestimmte Priorität einen vorbestimmten Schwellwert überschreitet. Durch Bestimmung einer Priorität einer Konfigurationsänderung kann die Wichtigkeit der Konfigurationsänderung ermittelt werden.

Gemäß einer weiteren vorteilhaften Ausgestaltung wird eine Mehrzahl von Zugriffsprofilen sowie eine Mehrzahl von Softwarekomponenten erfasst und beim Bewerten des wenigstens einen Änderungsprofils wird bestimmt, welche der Mehrzahl von Softwarekomponenten durch die wenigstens eine Konfigurationsänderung beeinflusst werden. Durch die Analyse einer Vielzahl von Zugriffsprofilen können wechselseitige Beeinflussungen von Softwarekomponenten erkannt und bei der Durchführung von Konfigurationsänderungen berücksichtigt werden.

Gemäß einer weiteren vorteilhaften Ausgestaltung umfasst das Rechnersystem wenigstens einen Arbeitsplatzrechner und wenigstens einen Wartungsrechner, die über ein Datennetzwerk miteinander gekoppelt sind, wobei das wenigstens eine Zugriffsprofil von dem wenigstens einen Arbeitsplatzrechner an den wenigstens einen Wartungsrechner übertragen wird. Durch Verwendung getrennter Arbeitsplatzrechner und Wartungsrechner kann eine Fernwartung eines Arbeitsplatzrechners durchgeführt werden.

Gemäß einer weiteren vorteilhaften Ausgestaltung umfasst das Rechnersystem eine Mehrzahl von Arbeitsplatzrechnern, wobei jeder Arbeitsplatzrechner wenigstens ein Zugriffsprofil an den Wartungsrechner überträgt und der Wartungsrechner bestimmt, welche der Arbeitsplatzrechner von der wenigstens einen Konfigurationsänderung beeinflusst werden. Durch die Bestimmung unterschiedlicher Beeinflussungen für unterschiedliche Arbeitsplatzrechner kann eine individuelle Entscheidung für jeden einer Mehrzahl von Arbeitsplatzrechnern getroffen werden.

Gemäß einer weiteren vorteilhaften Ausgestaltung wird die Bewertung der Betriebssicherheit für unterschiedliche Gruppen von Arbeitsplatzrechnern gesondert bestimmt und die wenigstens Konfigurationsänderung wird nur auf den Arbeitsplatzrechnern solcher Gruppen durchgeführt, für die eine Verbesserung der Betriebssicherheit bestimmt wurde. Durch die Bestimmung unterschiedlicher Gruppen von Arbeitsplatzrechnern kann eine weitere Verbesserung der Betriebssicherheit des Rechnersystems als Ganzes erreicht werden.

Gemäß einer weiteren vorteilhaften Ausgestaltung wird auf Grundlage der Zugriffsprofile der Mehrzahl von Arbeitsplatzrechnern eine Menge von kritischen Softwarekomponenten bestimmt und im Schritt des Bewertens der Betriebssicherheit wird der Einfluss der Konfigurationsänderung auf die kritischen Softwarekomponenten bestimmt. Durch die Bestimmung von kritischen Softwarenkomponenten kann der Einfluss der Konfigurationsänderung auf besonders wichtige Softwarekomponenten ermittelt werden.

Gemäß einer weiteren vorteilhaften Ausgestaltung wird eine erste Bewertungszahl für die Betriebssicherheit des Rechnersystems vor Durchführen der Konfigurationsänderung bestimmt und eine zweite Bewertungszahl für die Betriebssicherheit nach Durchführen der Konfigurationsänderung bestimmt, wobei der Konfigurationsänderung anhand der ersten und zweiten Bewertungszahl eine Qualitätszahl zugeordnet wird. Durch einen Vergleich von Bewertungszahlen von nach der Durchführung einer Konfigurationsänderung kann die Qualität der durchgeführten Konfigurationsänderung bestimmt werden.

Gemäß einer weiteren vorteilhaften Ausgestaltung wird die Qualitätszahl mit einem bestimmten Sollwert verglichen und bei Unterschreiten des Sollwertes die Konfigurationsänderung rückgängig gemacht. Durch Vergleich einer ermittelten Qualitätszahl mit einem vorbestimmten Sollwert kann eine Konfigurationsänderung dann rückgängig gemacht werden, wenn ein vorbestimmtes Qualitätsziel nicht erreicht wurde.

Gemäß einer weiteren vorteilhaften Ausgestaltung wird die Qualitätszahl bei der Bewertung einer weiteren Konfigurationsänderung berücksichtigt. Durch Berücksichtigung der Konfigurationsänderung bei der Bewertung einer weiteren Konfigurationsänderung können in der Vergangenheit gemachte Erfahrungen bei der Bewertung neuer Konfigurationsänderungen berücksichtig werden.

Die Aufgabe wird ebenso gelöst durch ein Verfahren zum Bereitstellen eines Zugriffsprofils durch eine Überwachungskomponente eines Rechnersystems, das die folgenden Schritte umfasst:
- Überwachen von Zugriffen auf Ressourcen des Rechnersystems,
- Zuordnen der überwachten Zugriffe zu wenigstens einer auf dem Rechnersystem installierten Softwarekomponente, von der der Zugriff ausgeht,
- Erfassen von Zugriffsdaten der zugeordneten Zugriffe,
- Erstellen eines Zugriffsprofils umfassend die erfassten Zugriffsdaten und
- Bereitstellen des erstellten Zugriffsprofils für eine Bewertungskomponente des Rechnersystems.
   Durch ein Verfahren mit den oben genannten Schritten kann ein Zugriffsprofil für eine Bewertung einer Konfigurationsänderung erstellt werden.

Die zugrunde liegende Aufgabe wird ebenso gelöst durch ein Verfahren zum Bewerten einer Software-Korrektur durch eine Bewertungskomponente eines Rechnersystems, das die folgenden Schritte umfasst:
- Einlesen einer Konfigurationsänderung, umfassend eine Mehrzahl von Datenelementen,
- Zuordnen der Datenelemente zu Ressourcen des Rechnersystems,
- Erstellen eines Änderungsprofils für die Konfigurationsänderung auf Grundlage der zugeordneten Datenelemente,
- Einlesen wenigstens einen Zugriffsprotokolls einer Softwarekomponente, umfassend eine Mehrzahl von Zugriffsdaten auf Ressourcen eines Rechnersystems,
- Analysieren, welche der Zugriffsdaten des Zugriffsprofils durch das erstellte Änderungsprofil beeinflusst werden, und
- Bewerten der Konfigurationsänderung bezüglich der Betriebssicherheit des Rechnersystems aufgrund der Analyse der Zugriffsdaten.

Durch ein Verfahren mit den oben genannten Schritten kann der Einfluss einer Konfigurationsänderung auf ein Rechnersystem mit einem zuvor erfassten Zugriffsprofil bestimmt werden.

Die Aufgabe wird ebenso durch ein Rechnersystem mit den Merkmalen gemäß Patentanspruch 18 gelöst, das dazu eingerichtet ist, die oben genannten Verfahren auszuführen.

Die zugrunde liegende Aufgabe wird ebenso durch ein Computerprogrammprodukt umfassend ausführbaren Programmcode gelöst, wobei beim Ausführen des Programmcodes eines der oben genannten Verfahren auf einem Rechnersystem ausgeführt wird.

Weitere Einzelheiten und Ausgestaltungen der Erfindung sind in den Unteransprüchen angegeben.

Die Erfindung wird nachfolgend anhand von Ausführungsbeispielen unter Zuhilfenahme von Figuren näher erläutert. In den Figuren zeigen:
- Figur 1A: ein Rechnersystem mit einem Arbeitsplatzrechner und einem Wartungsrechner,
- Figur 1B: einen Datenaustausch zwischen dem Arbeitsplatzrechner und dem Wartungsrechner,
- Figur 2: ein Ablaufdiagramm eines Verfahrens zur Wartung eines Rechnersystems,
- Figur 3: eine Überwachungskomponente zum Bereitstellen eines Zugriffsprofils,
- Figur 4: ein Ablaufdiagramm eines Verfahrens zum Bereitstellen eines Zugriffsprofils,
- Figur 5: eine Bewertungskomponente zum Bewerten einer Konfigurationsänderung,
- Figur 6: ein Ablaufdiagramm eines Verfahrens zum Bewerten einer Konfigurationsänderung,
- Figur 7A: ein Datenmodell eines Zugriffprofils,
- Figur 7B: ein Datenmodell eines Änderungsprofils und
- Figur 8: eine Systemarchitektur eines Wartungssystems.

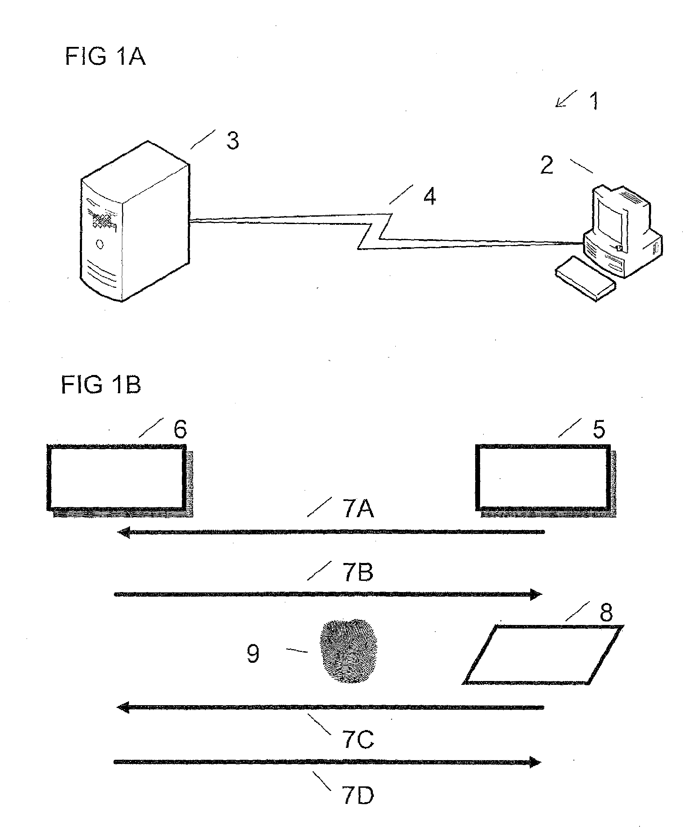

Figur 1A zeigt ein Rechnersystem 1. Das Rechnersystem 1 umfasst einen Arbeitsplatzrechner 2 und einen Wartungsrechner 3. Der Arbeitsplatzrechner 2 und der Wartungsrechner 3 sind über ein Datennetzwerk 4 miteinander verbunden.

Bei dem Arbeitsplatzrechner 2 und dem Wartungsrechner 3 kann es sich beispielsweise um so genannte Personalcomputer, Workstations oder auch Servercomputer handeln. Bei dem Datennetzwerk 4 kann es sich beispielsweise um ein firmeninternes lokales Netzwerk (LAN) oder ein standortübergreifendes Netzwerk (WAN) handeln, über das eine Mehrzahl von Arbeitsplatzrechnern 2 mit einem oder wenigen Wartungsrechnern 3 verbunden sind.

Figur 1B zeigt einen beispielhaften Datenfluss zwischen dem Arbeitsplatzrechner 2 und dem Wartungsrechner 3. Im dargestellten Ausführungsbeispiel ist auf dem Arbeitsplatzrechner 2 eine Überwachungskomponente 5 installiert. Auf dem Wartungsrechner 3 ist eine Bewertungskomponente 6 installiert.

Beispielsweise kann es sich bei der Überwachungskomponente 5 und der Bewertungskomponente 6 um auf dem Arbeitsplatzrechner 2 beziehungsweise dem Wartungsrechner 3 installierte Softwareprogramme handeln. Es ist jedoch auch möglich, die Überwachungskomponente 5 oder die Bewertungskomponente 6 durch eine Kombination von Hard- und Software zu implementieren.

Mit einer ersten Nachricht 7A überträgt die Überwachungskomponente 5 ein Anwesenheitssignal an die Bewertungskomponente 6. Beispielsweise kann ein so genanntes "Heartbeat-Signal" in regelmäßigen Zeitabständen von dem Arbeitsplatzrechner 2 an den Wartungsrechner 3 übermittelt werden, um eine Ausfallüberwachung durch den Wartungsrechner 3 zu ermöglichen. Zusammen mit der ersten Nachricht 7A können auch weitere Statusinformationen von der Überwachungskomponente 5 an die Bewertungskomponente 6 übertragen werden. Beispielsweise können zusammen mit der ersten Nachricht 7A auf dem Arbeitsplatzrechner 2 auftretende Probleme oder Fehler berichtet werden.

Mit einer zweiten Nachricht 7B übermittelt die Bewertungskomponente 6 an die Überwachungskomponente 5 eine Anforderung zur Übertragung von Zugriffsdaten 8. Beispielsweise können durch die zweite Nachricht 7B neu angefallene Zugriffsdaten 8 des Arbeitsplatzrechners 2 abgefragt werden. Alternativ ist es auch möglich, sämtliche auf einem Arbeitsplatzrechner 2 gespeicherten Zugriffsdaten 8 abzufragen.

Die Überwachungskomponente 5 stellt ein Zugriffsprofil 9 zusammen, das die mittels der zweiten Nachricht 7B angeforderten Zugriffsdaten 8 umfasst. Die Überwachungskomponente 5 kann die mit der zweiten Nachricht 7B angeforderten Daten beispielsweise aus einer internen Datenbank, einer Protokolldatei, auch genannt Logfile, oder über eine Systemschnittstelle abrufen.

Mit einer dritten Nachricht 7C wird das von der Überwachungskomponente 5 zusammengestellte Zugriffsprofil 9 an die Bewertungskomponente 6 übertragen. Somit steht das von der Überwachungskomponente 5 zusammengestellte Zugriffsprofil 9 zur weiteren Auswertung durch die Bewertungskomponente 6 lokal zur Verfügung.

Wurde das Zugriffsprofil 9 durch die Bewertungskomponente 6 korrekt empfangen und enthält es die mittels der zweiten Nachricht 7B angeforderten Zugriffsdaten 8, wird der Empfang des Zugriffsprofils 9 mit einer vierten Nachricht 7D an die Überwachungskomponente 5 bestätigt.

Das in den Figuren 1A und 1B dargestellte Rechnersystem 1 umfasst nur einen einzelnen Arbeitsplatzrechner 2. Selbstverständlich eignet sich das im Folgenden beschriebene Wartungsverfahren auch für solche Rechnersysteme, die eine Vielzahl von Arbeitsplatzrechnern 2 umfassen. Insbesondere bei der Erfassung einer Vielzahl von Zugriffsprofilen 9 einer Vielzahl von Arbeitsplatzrechnern 2 ergeben sich durch eine zentrale Bewertung der erfassten Zugriffsprofile 9 Vorteile bei der Durchführung von Konfigurationsänderungen durch den Wartungsrechner 3.

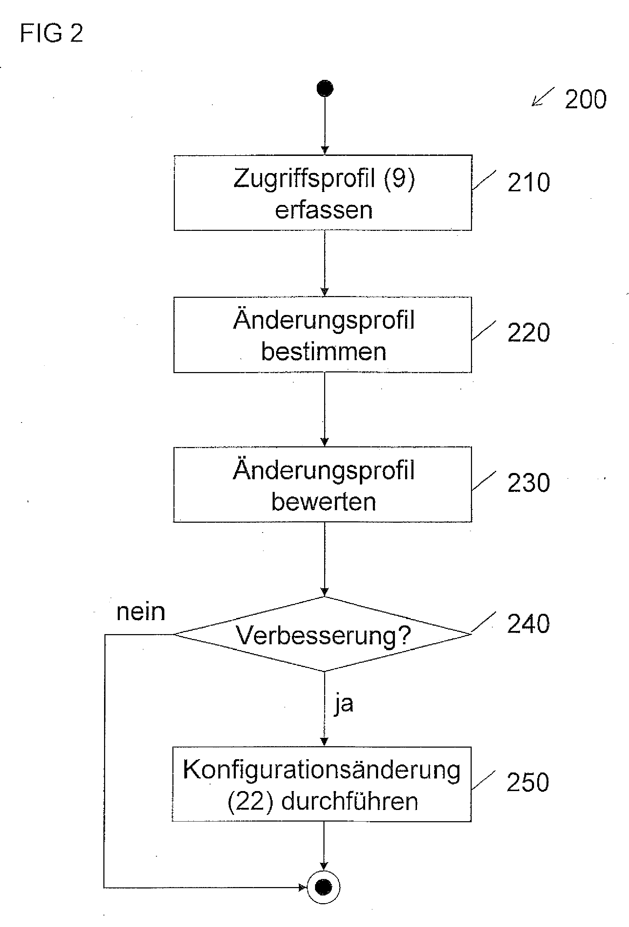

Figur 2 zeigt ein schematisches Ablaufdiagramm eines Verfahrens 200 zur Wartung eines Rechnersystems 1. Das Verfahren 200 eignet sich beispielsweise zur Wartung des in der Figur 1A dargestellten Rechnersystems 1.

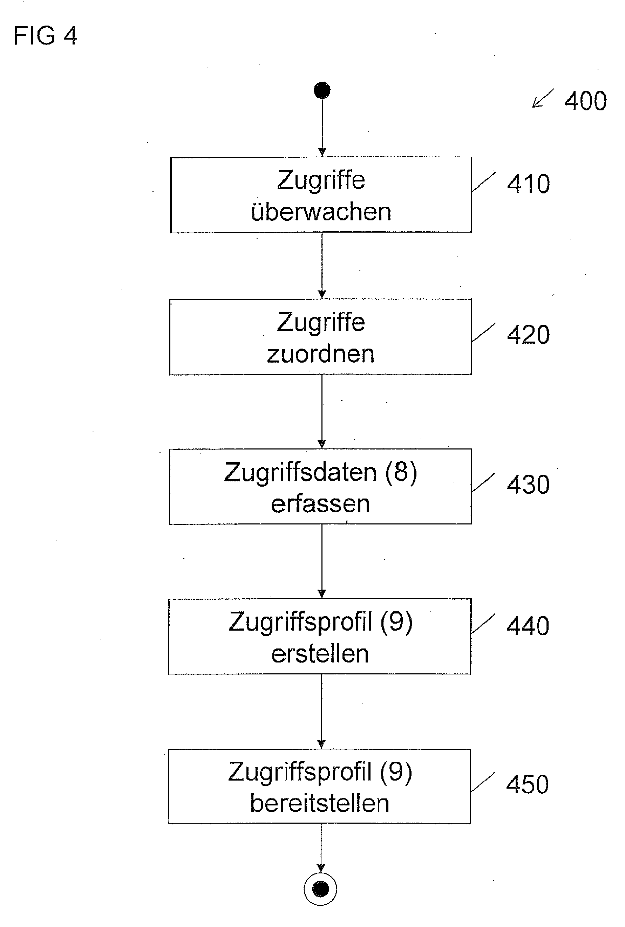

In einem ersten Schritt 210 wird ein Zugriffsprofil 9 für wenigstens eine Softwarekomponente 12 erfasst. In dem Schritt 210 werden Zugriffe der Softwarekomponenten 12 auf Ressourcen des Arbeitsplatzrechners 2 erfasst und in dem Zugriffsprofil 9 festgehalten. Die Details der Überwachung werden später unter Bezugnahme auf die Figur 4 erläutert. Bei der Softwarekomponente 12 kann es sich beispielsweise um ein Anwendungsprogramm handeln, das aus einer Vielzahl von ausführbaren Dateien, Systemeinstellungen und anderen Teilkomponenten besteht. Weitere mögliche Details des Schrittes 210 werden unter Bezugnahme auf die Figur 4 später beschrieben.

Das in der Figur 2 dargestellte Verfahren 200 umfasst des Weiteren einen Schritt 220. In dem Schritt 220 wird ein Änderungsprofil für wenigstens eine Konfigurationsänderung des Rechnersystems 1 bestimmt.

Beispielsweise kann die Bewertungskomponente 6 des Wartungsrechners 3 eine so genannte Fehlerkorrektur einlesen und ihre zugehörigen Datenelemente bestimmen. Fehlerkorrekturen erhalten in der Regel neue oder ergänzende Teilkomponenten für eine bereits auf einem Arbeitsplatzrechner 2 installierte Softwarekomponente 12. Beispielsweise können durch eine Softwarekorrektur Teile oder eine gesamte Bibliothekskomponente 14 durch eine neuere Version der entsprechenden Bibliothekskomponente ersetzt werden.

Es ist jedoch auch möglich, andere Konfigurationsänderungen, die beispielsweise eine Beschränkung oder Erweiterung von Zugriffsrechten 16 betreffen, zu analysieren und ein sich daraus ergebenes Änderungsprofil zu bestimmen.

In einem weiteren Schritt 230 wird das in dem Schritt 220 bestimmte Änderungsprofil bewertet. Bei der Bewertung des Änderungsprofils wird insbesondere ein zuvor durch die Überwachungskomponente 5 erfasstes Zugriffsprofil 9 berücksichtigt.

Beispielsweise wird in dem Schritt 230 analysiert, ob eine durch die Fehlerkorrektur ersetzte Datei von einer Softwarekomponente 12 überhaupt verwendet wird. Des Weiteren kann bestimmt werden, ob eine Änderung von Zugriffsrechten von einer Softwarekomponente 12 durchgeführte Zugriffe unmöglich macht.

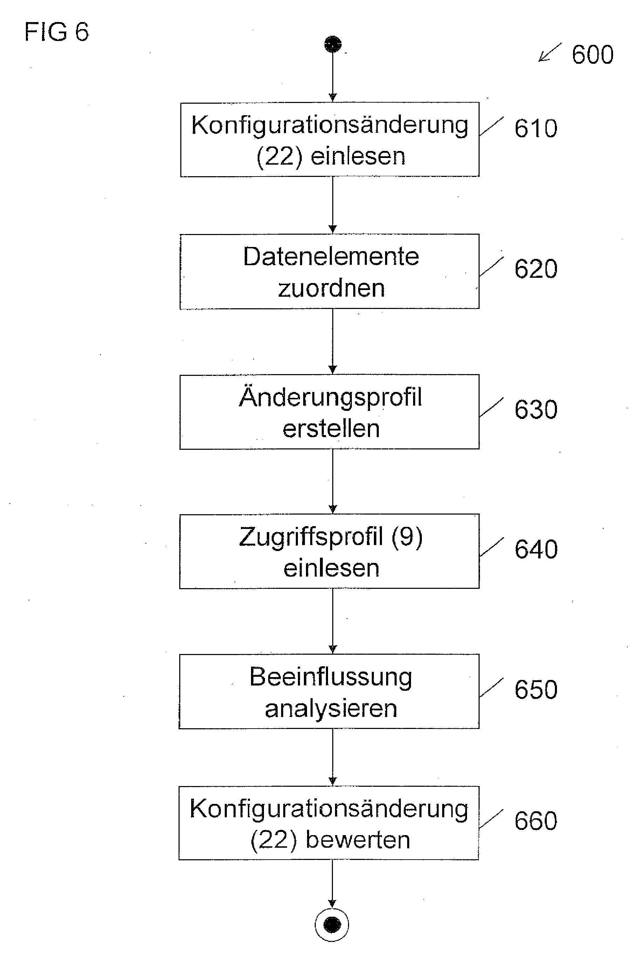

Weitere mögliche Details der Schritte 220 und 230 werden unter Bezugnahme auf die Figur 6 später beschrieben.

In einem weiteren Schritt 240 wird bestimmt, ob die in dem Schritt 230 durchgeführte Bewertung des Änderungsprofils eine Verbesserung oder eine Verschlechterung der Betriebssicherheit des Rechnersystems ergibt.

Für die Bestimmung der Betriebssicherheit wird insbesondere das Risiko bestimmt, das mit der Durchführung oder Nichtdurchführung einer Konfigurationsänderung einhergeht. Grundsätzlich besteht ein solches Risiko, wenn Ressourcen oder Teilkomponenten geändert werden, die von bestehenden Softwarekomponenten 12 genutzt werden. Werden einzelnen Teilkomponenten ersatzlos entfernt oder Zugriffsrecht beschränkt, besteht ein besonders hohes Risiko. Werden lediglich zusätzliche Teilkomponenten hinzugefügt, bleibt das Risiko der Beeinflussung bestehender Softwarekomponenten 12 gering.

Ein weiterer möglicher Faktor bei der Bewertung ist die Häufigkeit und Art der Verwendung eines bereits vorhandenen Teiles einer Softwarekomponente 12. Beispielsweise besteht eine hohe Gefahr für die Betriebssicherheit des Rechnersystems, wenn zentrale Softwarekomponenten 12 oder Teile davon entfernt werden. Beispielsweise kann die Funktion eines Firmennetzwerkes nachhaltig eingeschränkt werden, wenn zentrale Dienste, wie etwa ein E-Mail- oder Verzeichnisservice entfernt werden.

Gemäß einer Ausgestaltung der Erfindung sind Qualitätsinformationen zu einer geplanten Konfigurationsänderung automatisch abrufbar. Beispielsweise kann ein Produzent oder Vertreiber einer Fehlerkorrektur für diese eine Wichtigkeit, wie zum Beispiel "sicherheitskritisch" oder "nicht sicherheitskritische Funktionserweiterung", oder Zertifizierung, wie "vielfach getestet" oder "ungetestete Vorabversion" bereitstellen. Selbstverständlich können solche und andere Informationen auch manuell bereitgestellt werden, wenn sie beispielsweise bloß in der Dokumentation der Konfigurationsänderung enthalten sind.

Ein weiteres mögliches Entscheidungskriterium ist die Umkehrbarkeit der Konfigurationsänderung. Enthält eine Fehlerkorrektur beispielsweise ein Dienstprogramm, mit dem der ursprüngliche Zustand vor Installation der Fehlerkorrektur wiederherstellbar ist, birgt die Installation ein geringeres Risiko, als wenn eine Wiederherstellung gar nicht oder nur von Hand möglich ist.

Auf Grundlage der verschiedenen oben genannten Information entscheidet die Bewertungskomponente 6, ob eine mögliche Konfigurationsänderung sofort auf allen oder zumindest einigen der Arbeitsplatzrechnern 2 durchgeführt werden muss, die Durchführung ganz oder teilweise auf einen späteren Zeitpunkt verschoben werden kann, zunächst eine vorherige manuelle Bewertung durch einen Fachmann, gegebenenfalls nach Durchführung einer Testinstallation auf einem isolierten Arbeitsplatzrechner 2, nötig ist oder ob auf die Durchführung dauerhaft verzichtet werden kann oder soll.

In dem Fall, dass die Durchführung der Konfigurationsänderung zu einer Verschlechterung der Betriebssicherheit des Rechnersystems 1 führen würde, endet das in der Figur 2 dargestellte Verfahren. Wird jedoch ermittelt, dass die Durchführung der analysierten Konfigurationsänderung zu einer Verbesserung der Betriebssicherheit führen würde, wird die Konfigurationsänderung in einem nachfolgenden Schritt 250 durchgeführt. Beispielsweise kann eine Fehlerkorrektur auf einem Arbeitsplatzrechner 2 des Rechnersystems 1 installiert werden.

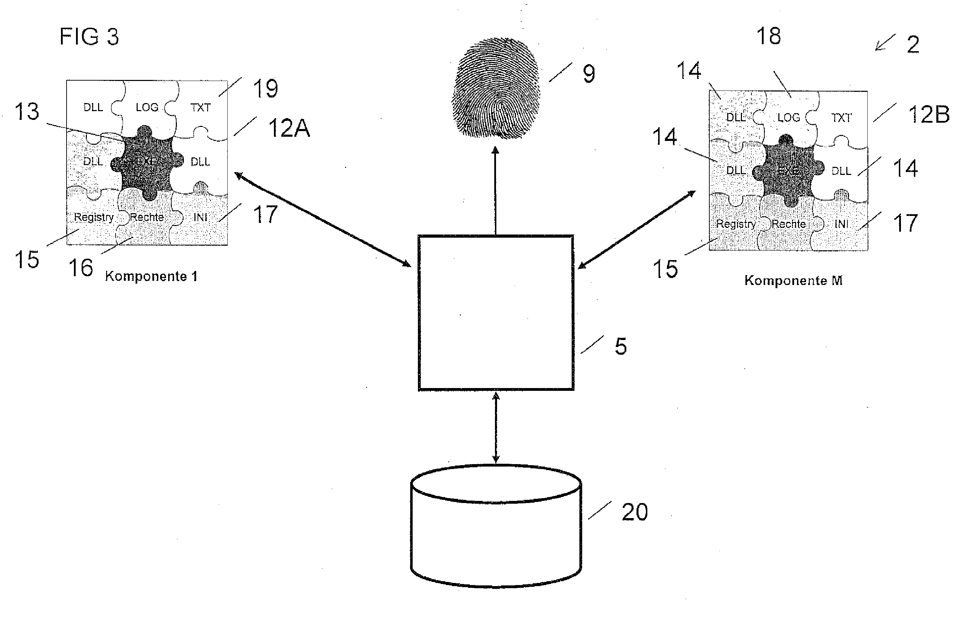

Figur 3 zeigt eine schematische Darstellung eines Arbeitsplatzrechners 2. Der Arbeitsplatzrechner 2 umfasst zwei Softwarekomponenten 12A und 12B, die auf dem Arbeitsplatzrechner 2 installiert sind. Des Weiteren umfasst der Arbeitsplatzrechner 2 eine Überwachungskomponente 5 und einer Speichervorrichtung 20.

Bei der Überwachungskomponente 5 kann es sich beispielsweise um ein auf dem Rechnersystem 1 eingerichtetes Überwachungsprogramm handeln, das Zugriffe der Softwarekomponenten 12 auf Schnittstellen eines Betriebssystems überwacht. Bei der Speichervorrichtung 20 kann es sich beispielsweise um eine lokale Festplatte des Arbeitsplatzrechners 2 oder um ein mit dem Arbeitsplatzrechner 2 verbundenes Datenbanksystem handeln.

Die in der Figur 3 dargestellten Softwarekomponenten 12A und 12B enthalten jeweils eine ausführbare Komponente 13, mehrere Bibliothekskomponenten 14, Registrierungsinformationen 15, Zugriffsrechte 16, Initialisierungsinformationen 17, ein Ereignislogbuch 18 sowie sonstige Teilkomponenten 19.

Beispielsweise handelt es sich bei der ausführbaren Komponente 13 um eine so genannte EXE- oder COM-Datei mit von einem Prozessor des Arbeitsplatzrechners 2 ausführbarem Programmcode oder um eine Skriptdatei. Bei der Bibliothekskomponente 14 kann es sich um anwendungsspezifische oder anwendungsübergreifende Bibliotheken, wie beispielsweise so genannte DLL-Bibliotheken handeln, die ebenfalls ausführbaren Programmcode enthalten. Bei den Registrierungsinformationen 15 handelt es sich beispielsweise um Einträge in der so genannten Windows-Registry oder in einem anderen Verzeichnisdienst, in der Voreinstellungen und sonstige Daten für die Softwarekomponente 12 hinterlegt sind. Bei den Zugriffsrechten 16 kann es sich beispielsweise um Zugriffsrechte zum Lesen, Schreiben oder Verändern von Dateien oder Verzeichnissen auf einem Datenträger des Arbeitsplatzrechners 2 handeln. Bei den Initialisierungsinformationen 17 handelt es sich beispielsweise um Einstellungen, die beim Start der Softwarekomponente 12 verwendet werden. In dem Ereignislogbuch 18 können beispielsweise Zugriffe auf Ressourcen des Arbeitsplatzrechners 2 oder auftretende Fehler, Warnhinweise oder so genannte Trace-Dateien gespeichert werden. Bei den sonstigen Teilkomponenten 19 handelt es sich beispielsweise um zu der Softwarekomponente 12 zugehörige Hilfedateien, Textdateien oder von der Softwarekomponente 12 bearbeitete Daten, Verzeichnisse oder Verknüpfungen.

Wie in der Figur 3 dargestellt, sind auf einem Arbeitsplatzrechner 2 oftmals mehrere Softwarekomponenten 12 installiert. Beispielsweise können eine Vielzahl von Anwendungsprogrammen, Treiberprogrammen und Systemkomponenten eines Betriebssystems auf den Arbeitsplatzrechner 2 installiert sein. Zusätzlich können Erweiterungen zu den einzelnen Anwendungsprogrammen, Treibern und Systemkomponenten auf dem Arbeitsplatzrechner 2 installiert sein. Selbstverständlich muss nicht jede Softwarekomponente 12 alle in der Figur 3 dargestellten Teilkomponenten umfassen.

Im Betrieb des Arbeitsplatzrechners 2 überwacht die Überwachungskomponente 5 alle oder eine vorbestimmte Auswahl von Zugriffen der Softwarekomponenten 12 auf Systemressourcen des Rechnersystems 2. Ressourcen im Sinne dieser Anmeldung können beispielsweise Zugriffe auf Hardwarekomponenten, wie beispielsweise Festplatten, Netzwerk- oder Grafikkarten oder sonstige mit dem Arbeitsplatzrechner 2 verbundene Hardwarevorrichtungen darstellen. Des Weiteren kann es sich bei den Ressourcen auch um auf dem Arbeitsplatzrechner 2 installierte Softwarekomponenten 12 handeln. Beispielsweise ist es möglich, dass die erste Softwarekomponente 12A zur erfolgreichen Durchführung einer Aufgabe auf die zweite Softwarekomponente 12B zugreift. Auch andere Zugriffe, wie beispielsweise auf über das Datennetzwerk 4 bereitgestellte Softwaredienste, wie etwa Web-Services, oder auftretende Fehlermeldungen können von der Überwachungskomponente 5 überwacht werden.

Figur 4 zeigt ein Ablaufdiagramm eines Verfahrens zum Bereitstellen eines Zugriffsprofils 9. Das Verfahren 400 eignet sich zur Durchführung auf dem in der Figur 3 dargestellten Arbeitsplatzrechner 2.

In einem Schritt 410 werden Zugriffe einzelner Softwarekomponenten 12 durch die Überwachungskomponente 5 überwacht. Beispielsweise kann sich die Überwachungskomponente 5 hierzu mittels so genannter Windows-Hooks in Hard- oder Software-Schnittstellen, wie dem so genannten Hardware-Abstraction-Layer des Betriebssystems, einhängen und dann Schreib- und Lesezugriffe oder Anforderungen zum Öffnen und Schließen von Dateien und anderen Ressourcen überwachen. Auch andere Möglichkeiten zur Überwachung, wie beispielsweise die Manipulation von Treiberprogrammen zum Zugriff auf Ressourcen oder die Auswertung von Protokolldateien sind möglich.

In einem Schritt 420 werden die in der Überwachung erkannten Zugriffe einer der Softwarekomponenten 12 zugeordnet. Beispielsweise kann bestimmt werden, von welcher der auf dem Arbeitsplatzrechner 2 installierten Softwarekomponenten 12 eine Zugriffsanfrage ursprünglich ausging, in dem eine Ursprungsadresse einer Anfrage mit einer aktuellen Speicherbelegung des Rechnersystems verglichen wird. Alternativ kann auch die Analyse eines so genannten Aufruf-Stacks durchgeführt werden.

In einem Schritt 430 werden Zugriffsdaten 8 des Zugriffes erfasst. Beispielsweise kann bestimmt werden, auf welche Ressource zugegriffen wird, wie lange der Zugriff andauert, in welcher Reihenfolge der Zugriff einem anderen Zugriff folgte oder vorausging oder wie viele Daten während des Zugriffs übertragen wurden. Auch andere mit dem Zugriff in Verbindung stehende Daten können in dem Schritt 430 durch die Überwachungskomponente 5 erfasst werden. Beispielsweise können Versions- oder Korrekturinformation der Softwarekomponente 12 oder deren Teile erfasst werden, deren Speicherort, Größe oder Erstellungsdatum bestimmt werden oder eine Überprüfung von Dateien, beispielsweise mittels einer so genannten CRC-Prüfsumme, durchgeführt werden.

Die nachfolgende Tabelle zeigt einen Satz von Zugriffsdaten 8, die während des Ausführung einer Softwarekomponente 12 erfasst wurden:

| **Ressource** | **Zugriffe** | **Dauer** |
|---|---|---|
| C:\Program Files\Application 1\EXE 1 | 2 | 30 Min |
| C:\WIN\DLL SYS | 10 | 4 Min |
| C:\WIN\system32\DLL SYS | 13 | 16 Min |
| C:\Program Files\Application 1\DLL 1 | 3 | 2 Min |
| C:\Program Files\Application 1\Registry | 3 | 1 Min |
| C:\Program Files\Common Files\FSC\DLL 1+2 | 1 | 1 Min |
| D:\Profiles\All Users\Application Data\FSC\INI 1 | 2 | 2 Min |

In einem Schritt 440 wird aus den erfassten Zugriffsdaten 8 ein Zugriffsprofil 9 erstellt. Beispielsweise kann eine Mehrzahl von Zugriffen einer einzelnen Softwarekomponente 12 zusammengefasst werden. Es ist auch möglich, sämtliche durch die Überwachungskomponente 5 überwachten Zugriffe in einem einzelnen Zugriffsprofil 9 zusammen zu stellen.

Das auf diese Weise zusammengestellte Zugriffsprofil 9 wird in einem Schritt 450 für den Wartungsrechner 3 bereitgestellt. Nach Bereitstellung des Zugriffsprofils 9 im Schritt 450 endet das Verfahren 400.

In dem in der Figur 3 dargestellten Ausführungsbeispiel werden die einzelnen Zugriffe durch die Überwachungskomponente 5 erfasst und in der Speichervorrichtung 20 zwischengespeichert. Beim Erkennen einer zweiten Nachricht 7B zum Übermitteln des Zugriffsprofils 9 werden sämtliche durch die Speichervorrichtung 20 gespeicherten Zugriffe zu einem Zugriffsprofil 9 zusammengefasst und an den Wartungsrechner 3 übertragen.

Optional kann die Überwachungskomponente 5 nach Erhalt der vierten Nachricht 7D, die die Übertragung des Zugriffsprofils 9 bestätigt, die in der Speichervorrichtung 20 gespeicherten Zugriffsdaten löschen, um Speicherplatz zu sparen.

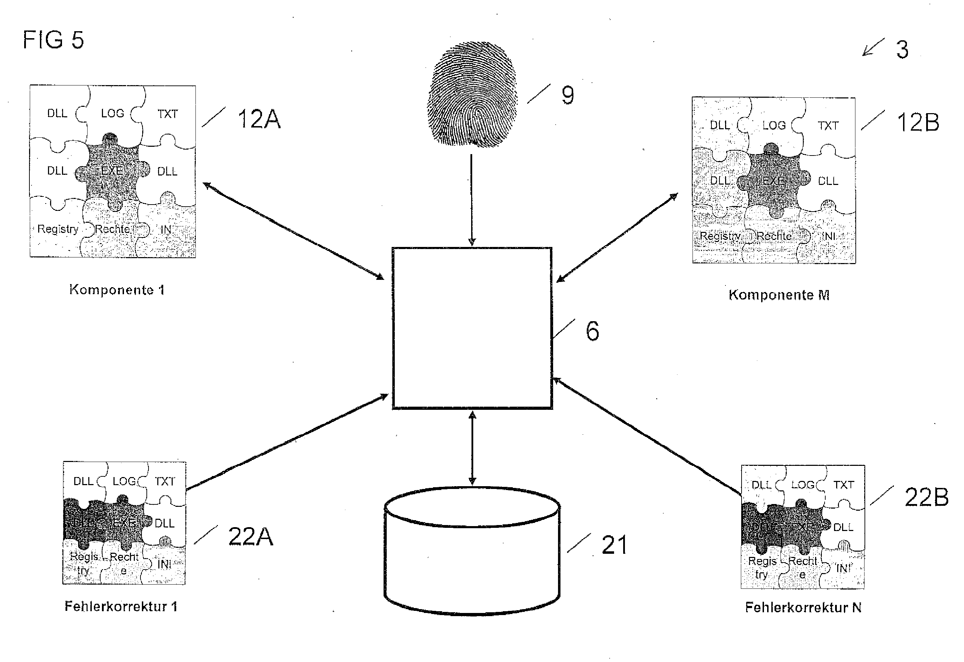

Figur 5 zeigt eine schematische Darstellung des Wartungsrechners 3. Der Wartungsrechner 3 umfasst eine Bewertungskomponente 6 und eine Wartungsdatenbank 21. Des Weiteren ist der Watungsrechner 3 dazu eingerichtet, Informationen über die Zusammensetzung möglicher Softwarekomponenten 12 und mögliche Konfigurationsänderungen 22 zu erfassen.

In dem in der Figur 5 gezeigten Ausführungsbeispiel ist die Bewertungskomponente 6 dazu eingerichtet, die Zusammensetzung der Softwarekomponenten 12 zu analysieren und den Einfluss der Konfigurationsänderungen 22 auf die Softwarekomponenten 12 zu bestimmen. Beispielsweise kann die Bewertungskomponente 6 erkannte Beeinflussungen von Konfigurationsänderungen 22 auf Softwarekomponenten 12 in der Wartungsdatenbank 21 ablegen.

Die Bewertungskomponente 6 ist des Weiteren dazu eingerichtet, von einer Überwachungskomponente 5 bereitgestellte Zugriffsprofile 9 zu analysieren. Insbesondere ist die Bewertungskomponente 6 dazu eingerichtet, eine Mehrzahl von Zugriffsprofilen 9 über das Datennetzwerk 4 zu empfangen und in der Wartungsdatenbank 21 abzulegen.

Soll eine der Konfigurationsänderungen 22 durch den Wartungsrechner 3 durchgeführt werden, werden die gesammelten Zugriffsprofile 9 aus der Wartungsdatenbank 21 abgerufen und bezüglich der bestimmten Beeinflussungen der Softwarekomponenten 12 analysiert. Auf Grundlage der Analyse wird die Betriebssicherheit des Rechnersystems nach Durchführung der geprüften Konfigurationsänderung 22 bestimmt.

Die einzelnen Schritte eines Verfahrens 600 zum Bewerten einer Konfigurationsänderung 22 sind in dem Ablaufdiagramm der Figur 6 dargestellt.

In einem ersten Schritt 610 wird eine Konfigurationsänderung 22 eingelesen. Die Konfigurationsänderung 22 umfasst mehrere Datenelemente. Beispielsweise kann eine Konfigurationsänderung 22 ähnlich aufgebaut sein wie eine Softwarekomponente 12.

Darüber hinaus umfasst eine Konfigurationsänderung 22 oftmals Informationen bezüglich anderer Softwarekomponenten, die zur Durchführung der Konfigurationsänderung 22 nötig sind oder ihr entgegenstehen. Handelt es sich bei der Konfigurationsänderung 22 beispielsweise um eine Fehlerkorrektur für eine Softwarekomponente 12 wie etwa ein Anwendungsprogramm, enthält die Konfigurationsänderung 22 oftmals Hinweise darauf, für welche Versionen des Softwarekomponente 12 die Fehlerkorrektur anwendbar ist.

In einem Schritt 620 werden die einzelnen Datenelemente der Konfigurationsänderung 22 Ressourcen des Rechnersystems 1 zugeordnet. Beispielsweise kann bestimmt werden, welche auf einem Arbeitsplatzrechner 2 installierten Dateien durch eine Installation einer Fehlerkorrektur geändert würden.

In einem Schritt 630 wird auf Grundlage der zugeordneten Datenelemente ein Änderungsprofil erstellt. Das Änderungsprofil kann beispielsweise Informationen darüber enthalten, welche Ressourcen bei Durchführung der Konfigurationsänderung 22 zusätzlich zur Verfügung stehen oder nicht länger zur Verfügung stehen.

In einem Schritt 640 wird wenigstens ein Zugriffsprofil 9 aus der Wartungsdatenbank 21 eingelesen. Beispielsweise können Zugriffsprofile 9 einer der Konfigurationsänderung 22A zugeordneten Softwarekomponente 12A eingelesen werden. Darüber hinaus können auch weitere Zugriffsprofile 9 eines Arbeitsplatzrechners 2, auf dem die Konfigurationsänderung 22 durchgeführt werden soll, eingelesen werden.

In einem Schritt 650 wird der Einfluss der beabsichtigten Konfigurationsänderung 22 auf das oder die Zugriffsprofile 9 analysiert.

Beispielsweise kann bestimmt werden, auf welche Softwarekomponenten 12 an einem Arbeitsplatzrechner 2 besonders häufig zugegriffen wird. Wird die durch den Arbeitsplatzrechner 2 besonders häufig benötigte Softwarekomponente 12 durch die Konfigurationsänderung 22 geändert oder möglicherweise sogar entfernt, kann die Funktion des Arbeitsplatzrechners 2 nachteilig beeinflusst werden.

Eine Durchführung der Konfigurationsänderung 22 auf dem Arbeitsplatzrechner 2 kann in diesem Fall jedoch auch besonders dringend sein, wenn die Konfigurationsänderung 22 Informationen darüber enthält, dass sie von dem Arbeitsplatzrechner 2 in der Vergangenheit gemeldete Probleme oder bekannte Sicherheitsprobleme behebt. Beispielsweise stellen Softwarehersteller regelmäßig Fehlerkorrekturen für so genannte Webbrowser bereit, die bekannt gewordene Sicherheitslücken schließen. Nach der Veröffentlichung einer solchen Sicherheitslücke ist deren Korrektur oftmals besonders dringend, weil zugleich mit der Korrektur in der Regel auch Angriffsmöglichkeiten zum Ausnutzen der Sicherheitslücke bekannt werden.

In einem Schritt 660 werden die im Schritt 650 analysierten Beeinflussungen bewertet. Ergibt sich aus der Bewertung, dass die Betriebssicherheit durch Durchführung der Konfigurationsänderung 22 des Rechnersystems 1 erhöht würde, wird der Konfigurationsänderung 22 eine positive Bewertungszahl zugeordnet. Umgekehrt wird der Konfigurationsänderung 22 eine negative Bewertungszahl zugeordnet, wenn die im Schritt 650 bestimmten Beeinflussungen zu einer negativen Beeinflussung der Betriebssicherheit führen können.

Die im Schritt 660 durchgeführte Bewertung kann für das Rechnersystem 1 insgesamt durchgeführt werden. Es ist jedoch auch möglich, bei Rechnersystemen mit mehreren Arbeitsplatzrechnern 2 die Bewertung je Arbeitsplatzrechner 2 durchzuführen. Bei einer nachfolgenden Durchführung der Konfigurationsänderung 22 brauchen dann nur solche Arbeitsplatzrechner 2 berücksichtigt werden, auf denen eine positive Beeinflussung der Betriebssicherheit durch Durchführung der Konfigurationsänderung 22 zu erwarten ist. Umgekehrt können solche Arbeitsplatzrechner 2 von der Durchführung der Konfigurationsänderung 22 ausgeschlossen werden, bei denen eine negative Beeinflussung der Betriebssicherheit zu erwarten ist.

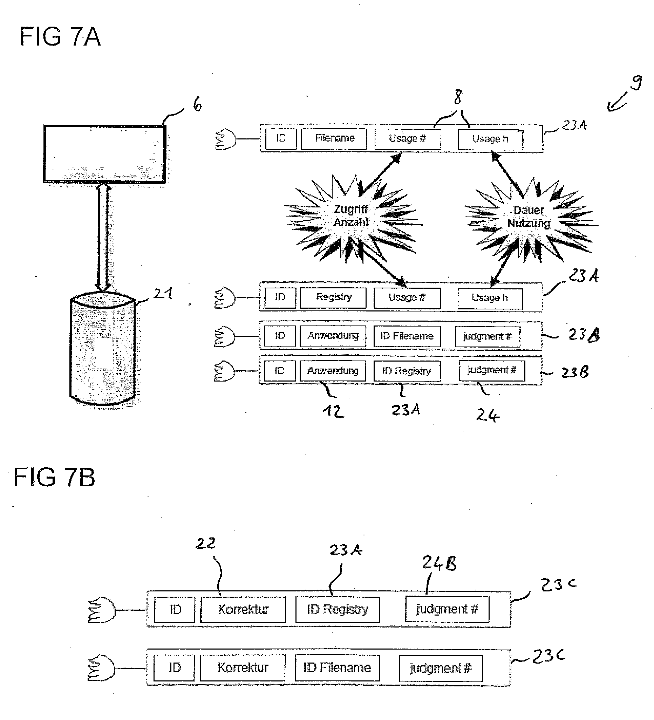

Die Figuren 7A und 7B zeigen ein mögliches Datenmodell der Wartungsdatenbank 21. Im dargestellten Ausführungsbeispiel enthält die Wartungsdatenbank 21 Relationen. Alternativ können jedoch auch objekt-relationale oder objekt-orientierte Datenbanken zur Speicherung der Zugriffsdaten 8 und -profile 9 verwendet werden.

Die Figur 7A zeigt Informationen eines Zugriffsprofils 9. Ein erster Datensatz 23A enthält jeweils die Zugriffsdaten 8 eines einzelnen Zugriffs auf eine Ressource. Die ersten Datensätze können direkt durch die Überwachungskomponente 5 in die Wartungsdatenbank 21 eingetragen werden. Alternativ können die Zugriffsdaten auch von der Bewertungskomponente 6 aus einem zuvor übertragenen Zugriffsprofil 9 extrahiert werden.

Durch zweite Datensätze 23B wird jeder Softwarekomponente 12 und jeder von ihr verwendeten Ressource eine erste Bewertungszahl 24A zugeordnet. Die erste Bewertungszahl 24A ist ein Maß für die Wichtigkeit des Zugriffs der Softwarekomponente 12. Sie kann beispielsweise durch Aggregation der ersten Datensätze 23A automatisch bestimmt werden oder manuell von einem Wartungstechniker bestimmt werden.

Figur 7B zeigt dritte Datensätze 23C eines Änderungsprofils. Die dritten Datensätze 23C enthalten Informationen darüber, welche Ressourcen gemäß einem der Datensätze 23A von einer Konfigurationsänderung 22 oder einem ihrer Datenelemente verändert werden. Diesen Relationen ist jeweils eine zweite Bewertungszahl 24B zugeordnet, die das Gewicht der jeweiligen Änderung bzw. ein damit verbundenes Risiko angibt.

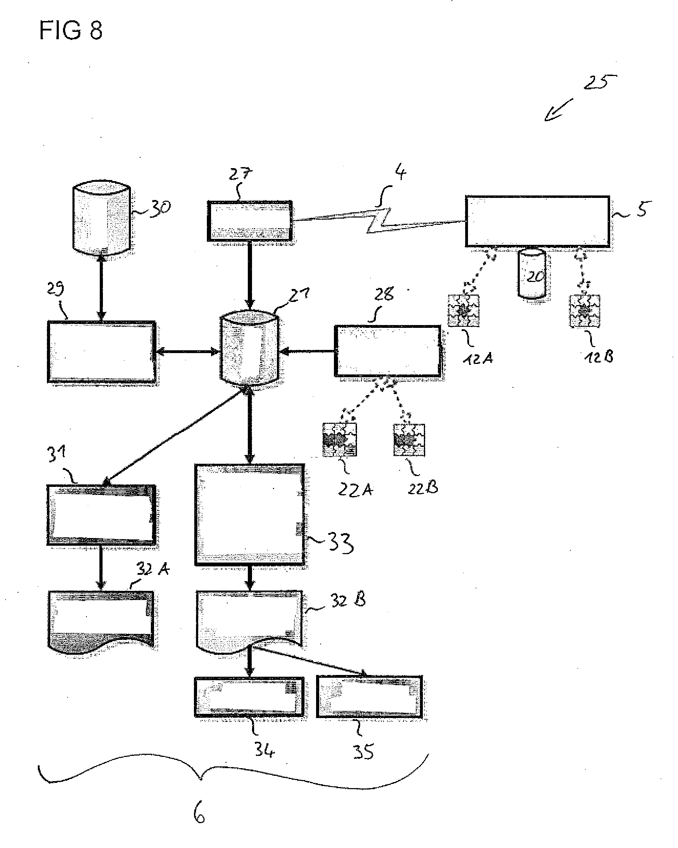

Figur 8 zeigt eine beispielhafte Software- und Systemarchitektur für ein Wartungssystem 25 gemäß einer Ausgestaltung der Erfindung.

Eine Überwachungskomponente 5 und überwacht und erfasst Zugriffe von Softwarekomponenten 12A und 12B. Die zugehörigen Zugriffsdaten 8 werden auf einem Speichermedium 20 abgelegt und auf Anforderung oder regelmäßig zusammengefasst und als Zugriffsprofile 9 über ein Datennetzwerk 4 übertragen.

Die Bewertungskomponente 6 umfasst im Ausführungsbeispiel eine Vielzahl von Modulen. Eine Servicemodul 27 erfasst die von der Überwachungskomponente 5 bereitgestellten Zugriffsprofile 9 und legt sie in geeigneter Form in einer Wartungsdatenbank 21 ab. Ein Untersuchungsmodul 28 analysiert möglich Konfigurationsänderungen 22A und 22B bezüglich der darin enthaltenen Datenelemente und legt zugehörige Informationen ebenfalls in der Wartungsdatenbank 21 ab. Ein so genannter Softwaremanagementmodul 29 analysiert Softwarekomponenten 12 und legt zugehörige Versions- und Installationsinformationen in einer SoftwaremanagementDatenbank 30 ab.

Basierend auf den in der Wartungsdatenbank 21 abgelegten Informationen erstellt ein Inspektionsmodul 31 erste Berichte 32A, die einem Systemadministrator einen Überblick über den Installationsstand eines Rechnersystems 1 geben, Abweichungen von einem Sollzustand aufzeigen oder auftretende Fehlermeldungen enthalten.

Ein Bewertungsmodul 33 bewertet mögliche Konfigurationsänderungen 22 bezüglich ihres Einflusses auf die Betriebssicherheit. Das Bewertungsmodul 33 erzeugt zweite Berichte 32B, die eine automatisch bestimmte Dringlichkeit, mögliche positive und negative Folgen der Konfigurationsänderung 22 und sonstige entscheidungsrelevante Informationen enthält. Das Ergebnis wird einem Risikomanagementmodul 34 und einem Änderungsmanagementmodul 35 zugeführt. Das Risikomanagementmodul 34 bestimmt mögliche Risiken für den Betriebsablauf. Das Änderungsmanagementmodul 35 unterstützt einen Systemadministrator bei der Durchführung und gegebenenfalls Rücknahme von Konfigurationsänderungen 22.

Durch die vorangehend beschriebenen Verfahren und Systeme zum Erfassen eines Zugriffsprofils 9, Bewerten einer Konfigurationsänderung 22 und Wartung eines Rechnersystems 1 wird eine zentrale Wartung insbesondere umfangreicher Rechnersysteme ermöglicht. Darüber hinaus kann auf Grundlage eines mittels des Zugriffsprofils 9 erfassten Nutzungsprofils eine Priorisierung bei der Durchführung von Konfigurationsänderungen 22 berücksichtigt werden.

Beispielsweise stellen größere Softwarehersteller zu vorbestimmten Terminen, so genannten Patchdays, eine Vielzahl von Fehlerkorrekturen bereit. Die bereitgestellten Fehlerkorrekturen beheben eine Vielzahl von möglicherweise auf einem Arbeitsplatzrechner 2 installierten Softwarekomponenten 12. Jedoch ist es oft aufgrund von betrieblichen Abläufen nicht möglich, alle bereitgestellten Fehlerkorrekturen gleichzeitig und auf allen Arbeitsplatzrechnern 2 zu installieren, ohne nachhaltig in den Betrieb des Rechnersystems 1 einzugreifen. Ausgehend von den in den Konfigurationsänderungen 22 und den erfassten Zugriffsprofilen 9 enthaltenen Informationen, werden bevorzugt nur solche Konfigurationsänderung 22 durchgeführt, die eine Erhöhung der Betriebssicherheit oder Betriebsproduktivität erwarten lässt.

Andere Fehlerkorrekturen, die lediglich solche Softwarekomponenten 12 betreffen, die verhältnismäßig selten in dem Rechnersystem 1 ausgeführt werden, können zu einem späteren Zeitpunkt, beispielsweise über Nacht oder am Wochenende installiert werden. Andere Konfigurationsänderungen 22, die in dem Rechnersystem 1 überhaupt keine Auswirkungen haben, brauchen überhaupt nicht installiert werden und können somit auch nicht zu Beeinträchtigungen des Rechnersystems 1 führen.

Neben der eigentlichen Wartung des Rechnersystems 1 erfüllt das beschriebene Verfahren zum Bereitstellen von Zugriffsprofilen weitere Funktion. Durch die zentrale Erfassung von Zugriffsprofilen 9 einer Vielzahl von Arbeitsplatzrechnern 2 auf einem Wartungsrechner 3 kann ein Gesamtbild der auf den verschiedenen Arbeitsplatzrechnern 2 vorhandenen Softwarekomponenten 12 erstellt werden.

Davon ausgehend kann beispielsweise ein Vergleich eines in der Wartungsdatenbank 21 abgelegten Sollzustandes mit einem auf einem Arbeitsplatzrechner 2 durch die Überwachungskomponente 5 erfassten Ist-Zustand durchgeführt werden. Weichen Ist- und Sollzustand voneinander ab, beispielsweise weil ein Benutzer eines Arbeitsplatzrechner 2 eigenmächtig Konfigurationsänderungen 22 durchgeführt hat, können diese an dem Wartungsrechner 3 erfasst und gegebenenfalls rückgängig gemacht werden.

Darüber hinaus kann erkannt werden, ob eine auf einem Arbeitsplatzrechner 2 installierte Softwarekomponente 12 an dem zugehörigen Arbeitsplatz überhaupt benötigt wird. Beispielsweise kann durch eine zentrale Erfassung von Zugriffsprofilen 9 erkannt werden, ob ein auf jedem Arbeitsplatzrechner 2 installiertes Anwendungsprogramm nur auf wenigen der Arbeitsplatzrechner 2 jemals gestartet wird. In diesem Fall können finanzielle Aufwendungen, die für den Erwerb oder die Nutzung der Softwarekomponente 12 anfallen, vermieden werden, in dem die Softwarekomponente 12 von den Arbeitsplatzrechnern 12 entfernt wird, auf denen sie nicht oder nur sehr selten ausgeführt wird.

Die in den Figuren 1A, 3, 5 und 8 dargestellten Systeme und Anordnungen sowie die in den Figuren 7A und 7B dargestellten Datenmodelle besitzen nur beispielhaften Charakter. Selbstverständlich können die einzelnen Komponenten der beschriebenen Systems in vielfältiger Art zusammengefasst oder verteilt werden, ohne das sich hierdurch eine wesentliche Änderung deren Funktion ergibt.

Auch die in den Figuren 1B, 2, 4 und 6 dargestellte Reihenfolge von Schritten stellt nur eine beispielhafte Ausgestaltung der jeweiligen Verfahren dar. Selbstverständlich können die darin dargestellten Schritte auch in vielen anderen Reihenfolgen oder parallel zueinander ausgeführt werden, um die Verarbeitung zu verbessern oder zu vereinfachen. Des Weiteren können mehrere Schritte zu einem einzelnen Schritt zusammengefasst werden. Ein einzelner Schritt kann auch in eine Reihe von mehreren Schritten aufgeteilt werden.

### Bezugszeichenliste

- 1: Rechnersystem
- 2: Arbeitsplatzrechner
- 3: Wartungsrechner
- 4: Datennetzwerk
- 5: Überwachungskomponente
- 6: Bewertungskomponente
- 7: Nachricht
- 8: Zugriffsdaten
- 9: Zugriffsprofil
- 12: Softwarekomponente
- 13: ausführbare Komponente
- 14: Bibliothekskomponente
- 15: Registrierungsinformation
- 16: Zugriffsrecht
- 17: Initialisierungsinformation
- 18: Ereignislogbuch
- 19: sonstige Teilkomponente
- 20: Speichervorrichtung
- 21: Wartungsdatenbank
- 22: Konfigurationsänderung
- 23: Datensatz
- 24: Bewertungszahl
- 25: Wartungssystem
- 27: Servicemodul
- 28: Untersuchungsmodul
- 29: Softwaremanagementmodul
- 30: Softwaremanagementdatenbank
- 31: Inspektionsmodul
- 32: Bericht
- 33: Auswertemodul
- 34: Risikomanagementmodul
- 35: Veränderungsmanagementmodul

## Patentansprüche

1. Verfahren zur Wartung eines Rechnersystems (1), umfassend:
- Erfassen wenigstens eines Zugriffsprofils (9) für wenigstens eine auf dem Rechnersystem (1) installierte Softwarekomponente (12),
- Bestimmen wenigstens eines Änderungsprofils für wenigstens eine Konfigurationsänderung (22),
- Bewerten des wenigstens einen bestimmten Änderungsprofils bezüglich einer Betriebssicherheit des Rechnersystems (1) auf Grundlage des wenigstens einen Zugriffsprofils (9) und
- Durchführen der wenigstens einen Konfigurationsänderung (22) nur dann, wenn die Bewertung eine Verbesserung der Betriebssicherheit ergibt.

2. Verfahren nach Anspruch 1, **dadurch gekennzeichnet, dass** die wenigstens eine Konfigurationsänderung (22) wenigstens eine Fehlerkorrektur für eine zu korrigierende Softwarekomponente (12) umfasst, wobei die Fehlerkorrektur nur dann auf dem Rechnersystem (1) installiert wird, wenn das wenigstens eine Zugriffsprofil (9) wenigstens einen Zugriff auf die zu korrigierende Softwarekomponente (12) umfasst.

3. Verfahren nach Anspruch 1 oder 2,
**dadurch gekennzeichnet, dass**
im Schritt des Bestimmens des wenigstens einen Änderungsprofils Unverträglichkeitsinformationen für die wenigstens eine Konfigurationsänderung (22) bezüglich einer beeinflussten Softwarekomponente (12) bestimmt werden, wobei die Konfigurationsänderung (22) nur dann in dem Rechnersystem (1) durchgeführt wird, wenn das Zugriffsprofil (9) keinen Zugriff auf die beeinflusste Softwarekomponente (12) umfasst.

4. Verfahren nach einem der Ansprüche 1 bis 3,
**dadurch gekennzeichnet, dass**
im Schritt des Bestimmens des wenigstens einen Änderungsprofils eine Priorität für die Konfigurationsänderung (22) bestimmt wird, wobei die wenigstens eine Konfigurationsänderung (22) nur dann in dem Rechnersystem (1) durchgeführt wird, wenn die bestimmte Priorität einen vorbestimmten Schwellwert überschreitet.

5. Verfahren nach einem der Ansprüche 1 bis 4,
**dadurch gekennzeichnet, dass**
eine Mehrzahl von Zugriffsprofilen (9) für eine Mehrzahl von Softwarekomponenten (12) erfasst wird und beim Bewerten des wenigstens einen Änderungsprofils bestimmt wird, welche der Mehrzahl von Softwarekomponenten (12) durch die wenigstens eine Konfigurationsänderung (22) beeinflusst werden.

6. Verfahren nach einem der Ansprüche 1 bis 5,
**dadurch gekennzeichnet, dass**
das Rechnersystem wenigstens einen Arbeitsplatzrechner (2) und wenigstens einen Wartungsrechner (3) umfasst, die über ein Datennetzwerk (4) miteinander gekoppelt sind, wobei das wenigstens eine Zugriffsprofil (9) von dem wenigstens einen Arbeitsplatzrechner (2) an den wenigstens einen Wartungsrechner (3) übertragen wird.

7. Verfahren nach Anspruch 6, **dadurch gekennzeichnet, dass** das Rechnersystem (1) eine Mehrzahl von Arbeitsplatzrechnern (2) umfasst, wobei jeder Arbeitsplatzrechner (2) wenigstens ein Zugriffsprofil (9) an den Wartungsrechner (3) übertragt und der Wartungsrechner (3) bestimmt, welche der Arbeitsplatzrechner (2) von wenigstens einer Konfigurationsänderung (22) beeinflusst werden.

8. Verfahren nach Anspruch 7, **dadurch gekennzeichnet, dass** die Bewertung der Betriebssicherheit für unterschiedliche Gruppen von Arbeitsplatzrechnern (2) gesondert bestimmt wird und die wenigstens eine Konfigurationsänderung (22) nur auf den Arbeitsplatzrechnern (2) solcher Gruppen durchgeführt wird, für die eine Verbesserung der Betriebssicherheit bestimmt wurde.

9. Verfahren nach Anspruch 7 oder 8,
**dadurch gekennzeichnet, dass**
auf Grundlage der Zugriffsprofile (9) der Mehrzahl von Arbeitsplatzrechnern (2) eine Menge von kritischen Softwarekomponenten (12) bestimmt wird und im Schritt des Bewertens der Betriebssicherheit der Einfluss der Konfigurationsänderung (22) auf die kritischen Softwarekomponenten (12) bestimmt wird.

10. Verfahren nach einem der Ansprüche 1 bis 9,
**dadurch gekennzeichnet, dass**
eine erste Bewertungszahl für die Betriebssicherheit des Rechnersystems (1) vor Durchführen der Konfigurationsänderung (22) bestimmt wird, eine zweite Bewertungszahl für die Betriebssicherheit nach Durchführen der Konfigurationsänderung (22) bestimmt wird und anhand der ersten und zweiten Bewertungszahl der Konfigurationsänderung (22) eine Qualitätszahl zugeordnet wird.

11. Verfahren nach Anspruch 10, **dadurch gekennzeichnet, dass** die Qualitätszahl mit einem vorbestimmten Sollwert verglichen wird und bei Unterschreiten des Sollwertes die Konfigurationsänderung (22) rückgängig gemacht wird.

12. Verfahren nach Anspruch 10, **dadurch gekennzeichnet, dass** die Qualitätszahl bei der Bewertung einer weiteren Konfigurationsänderung (22) berücksichtigt wird.

13. Verfahren zum Bereitstellen eines Zugriffsprofils (9) durch eine Überwachungskomponente (5) eines Rechnersystems (1), umfassend:
- Überwachen von Zugriffen auf Ressourcen des Rechnersystems (1),
- Zuordnen der überwachten Zugriffe zu wenigstens einer auf dem Rechnersystem (1) installierten Softwarekomponente (12), von der der Zugriff ausgeht,
- Erfassen von Zugriffsdaten (8) der zugeordneten Zugriffe,
- Erstellen eines Zugriffsprofils (9) umfassend die erfassten Zugriffsdaten (8) und
- Bereitstellen des erstellten Zugriffsprofils (9) für eine Bewertungskomponente (6) des Rechnersystems (1).

14. Verfahren nach Anspruch 13, **dadurch gekennzeichnet, dass** Zugriffe auf Dateien, Dateisysteme, Konfigurationsdaten, Geräte, Gerätetreiber oder andere Softwarekomponenten (12) überwacht werden.

15. Verfahren nach Anspruch 13 oder 14,
**dadurch gekennzeichnet, dass**
eine Zugriffshäufigkeit, eine Zugriffsdauer, eine Zugriffsreihenfolge oder eine Zugriffsabhängigkeit als Zugriffsdaten (8) erfasst werden.

16. Verfahren nach einem der Ansprüche 13 bis 15,
**dadurch gekennzeichnet, dass**
auf Grundlage der Zugriffsdaten (8) die Anzahl und Art der genutzten Softwarekomponenten (12) bestimmt wird.

17. Verfahren zum Bewerten einer Konfigurationsänderung (22) durch eine Bewertungskomponente (6) eines Rechnersystems (1), umfassend:
- Einlesen einer Konfigurationsänderung (22), umfassend eine Mehrzahl von Datenelementen,
- Zuordnen der Datenelemente zu Ressourcen des Rechnersystems (1),
- Erstellen eines Änderungsprofils für die Konfigurationsänderung (22) auf Grundlage der zugeordneten Datenelemente,
- Einlesen wenigstens eines Zugriffsprofils (9) einer Softwarekomponente (12) umfassend eine Mehrzahl von Zugriffsdaten (8) auf Ressourcen des Rechnersystems (1),
- Analysieren, welche der Zugriffsdaten (8) des Zugriffsprofils (9) durch das erstellte Änderungsprofil beeinflusst werden, und
- Bewerten der Konfigurationsänderung (22) bezüglich der Betriebssicherheit des Rechnersystems (1) aufgrund der Analyse der Zugriffsdaten (8).

18. Rechnersystem (1), umfassend:
- wenigstens einen Arbeitsplatzrechner (2) mit einer Überwachungskomponente (5) und wenigstens einer anderen installierten Softwarekomponente (12), wobei die Überwachungskomponente (5) dazu eingerichtet ist, ein Zugriffsprofil (9) für die wenigstens eine installierte Softwarekomponente (12) gemäß einem Verfahren nach einem der Ansprüche 13 bis 16 zu erstellen,
- wenigstens einem Wartungsrechner (3) mit wenigstens einer Bewertungskomponente (6), wobei diese dazu eingerichtet ist, wenigstens eine Konfigurationsänderung (22) auf Grundlage des erstellten Zugriffsprofils (9) gemäß einem Verfahren (17) zu bewerten,
- ein Datennetzwerk (4) das mit dem wenigstens einen Arbeitsplatzrechner (2) und dem wenigstens Wartungsrechner (3) gekoppelt und dazu eingerichtet ist, das Zugriffsprofil (9) von dem Arbeitsplatzrechner (2) auf den Wartungsrechner (3) zu übertragen.

19. Rechnersystem (1) nach Anspruch 18, **gekennzeichnet durch** wenigstens eine Datenbank (21), die zum Speichern von Zugriffsprofilen (9) und/oder Änderungsprofilen eingerichtet ist.

20. Computerprogrammprodukt, umfassend ausführbaren Programmcode, wobei beim Ausführen des Programmcodes auf einem Rechnersystem (1) ein Verfahren gemäß einem der Ansprüche 1 bis 17 durch das Rechnersystem 1 ausgeführt wird.
